(19) Europäisches Patentamt / European Patent Office / Office européen des brevets

(11) **EP 2 718 469 B1**

(12) **FASCICULE DE BREVET EUROPEEN**

(45) Date de publication et mention de la délivrance du brevet:
**16.11.2016 Bulletin 2016/46**

(21) Numéro de dépôt: **12722751.0**

(22) Date de dépôt: **17.05.2012**

(51) Int Cl.:
*C21D 1/20* *(2006.01)*    *C21D 8/02* *(2006.01)*
*C21D 9/46* *(2006.01)*    *C22C 38/02* *(2006.01)*
*C22C 38/04* *(2006.01)*    *C22C 38/06* *(2006.01)*
*C22C 38/12* *(2006.01)*

(86) Numéro de dépôt international:
**PCT/FR2012/000150**

(87) Numéro de publication internationale:
**WO 2012/168567 (13.12.2012 Gazette 2012/50)**

(54) **TÔLE D'ACIER LAMINÉE À FROID ET REVÊTUE DE ZINC OU D'ALLIAGE DE ZINC, PROCEDE DE FABRICATION ET UTILISATION D'UNE TELLE TÔLE**

KALTGEWALZTES STAHLBLECH MIT ZINK ODER ZINKLEGIERUNGSBESCHICHTUNG, HERSTELLUNGSVERFAHREN DAFÜR UND VERWENDUNG EINES SOLCHEN STAHLBLECHS

COLD-ROLLED STEEL PLATE COATED WITH ZINC OR A ZINC ALLOY, METHOD FOR MANUFACTURING SAME, AND USE OF SUCH A STEEL PLATE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.06.2011 PCT/FR2011/000331**

(43) Date de publication de la demande:
**16.04.2014 Bulletin 2014/16**

(73) Titulaire: **ArcelorMittal**
**1160 Luxembourg (LU)**

(72) Inventeurs:
• **MBACKE, Papa Amadou Mactar**
**F-75012 Paris (FR)**
• **MOULIN, Antoine**
**F-57000 Metz (FR)**

(74) Mandataire: **Plaisant, Sophie Marie**
**ArcelorMittal France**
**Research & Development**
**Intellectual Property**
**6, rue André Campra**
**Immeuble Le Cezanne**
**93200 Saint Denis (FR)**

(56) Documents cités:
**EP-A1- 1 431 406**      **EP-A1- 1 865 085**
**JP-A- 2002 030 403**    **US-A- 5 470 529**

• **WASILKOWSKA A ET AL: "Microstructure and tensile behaviour of cold-rolled TRIP-aided steels", JOURNAL OF MATERIALS PROCESSING TECHNOLOGY, ELSEVIER, NL, vol. 157-158, 20 décembre 2004 (2004-12-20), pages 633-636, XP004681771, ISSN: 0924-0136, DOI: 10.1016/J.JMATPROTEC.2004.07.126**
• **DE COOMAN B C: "Structure-properties relationship in TRIP steels containing carbide-free bainite", CURRENT OPINION IN SOLID STATE AND MATERIALS SCIENCE, ELSEVIER SCIENCE LTD, OXFORD, GB, vol. 8, no. 3-4, 1 juin 2004 (2004-06-01), pages 285-303, XP004742054, ISSN: 1359-0286, DOI: 10.1016/J.COSSMS.2004.10.002**

**Description**

L'invention concerne la fabrication de tôles revêtues laminées à froid présentant un effet «TRIP» (Transformation Induced Plasticity) pour la fabrication de pièces par mise en forme, plus particulièrement destinées aux véhicules terrestres à moteur.

La réduction des émissions de gaz à effet de serre dans le domaine des transports terrestres est aujourd'hui un enjeu qui passe par la réduction du poids des véhicules afin de réduire leur consommation en carburant. En combinant cela avec les impératifs de sécurité des véhicules de nouvelle génération, les constructeurs automobiles sont poussés à utiliser de plus en plus d'aciers à résistance mécanique améliorée dans la carrosserie afin de réduire l'épaisseur des pièces et donc le poids des véhicules. Les pièces des véhicules de nouvelle génération ont néanmoins des formes complexes qui nécessitent une ductilité suffisante de la part des tôles d'acier dont elles sont éventuellement issues.

Dans cette perspective, les aciers dits TRIP ont connu un grand développement car ils allient une résistance élevée à une formabilité élevée. Ce bon compromis entre la résistance mécanique et la formabilité résulte de sa structure complexe comprenant de la ferrite, qui est un constituant ductile, les constituants plus durs que sont les îlots de Martensite et d'Austénite (MA) majoritairement de l'austénite résiduelle, et enfin la matrice de ferrite bainitique ayant une résistance mécanique et une ductilité intermédiaire entre la ferrite et les îlots MA. La capacité de consolidation des aciers à effet TRIP est très grande, ce qui permet une bonne répartition des déformations dans le cas d'une collision voire lors de la mise en forme de la pièce automobile. On peut réaliser ainsi des pièces aussi complexes qu'avec des aciers conventionnels, mais avec des propriétés mécaniques plus élevées, ce qui autorise une diminution d'épaisseur pour tenir un cahier des charges fonctionnel identique en termes de comportement mécanique. De la sorte, ces aciers sont une réponse efficace aux exigences d'allègement et de sécurité des véhicules. Dans le domaine des tôles laminées à chaud ou laminées à froid, ce type d'acier trouve notamment des applications pour des pièces de structures et de sécurité pour les véhicules automobiles.

Les exigences récentes d'allègement et de réduction de la consommation d'énergie ont conduit à une demande certaine d'aciers TRIP, dont la résistance mécanique Rm est comprise entre 780 et 900MPa et l'allongement total est supérieur à 19% avec une éprouvette de type ISO. Outre ce niveau de résistance et de ductilité, ces aciers doivent présenter une bonne soudabilité et une bonne aptitude à la galvanisation en continu au trempé. Ces aciers doivent également présenter une bonne aptitude au pliage.

Ainsi, connaît-on le document JP2001254138 qui décrit des aciers avec pour composition chimique : 0,05-0,3% C, 0,3-2,5% Si, 0,5-3,0% Mn et 0,001-2,0% Al, le reste étant constitué de fer et d'impuretés inévitables. La structure comprend de l'austénite résiduelle dont la concentration massique en carbone est supérieure ou égale à 1% et la fraction volumique est comprise entre 3 et 50%, et de la ferrite dont le facteur de forme est compris entre 0,5 et 3 et le volume compris entre 50 et 97%. Ce document fait référence à un acier non revêtu, et l'invention dans le cadre de ce brevet ne permet pas de former une tôle nécessitant une résistance mécanique particulière associée à une forte ductilité pour former une pièce complexe et revêtue de structure automobile. On connait aussi le document WO2002101112 qui décrit par ailleurs des aciers avec pour composition chimique : C: 0,0001 - 0,3%, Si: 0,001 - 2,5%, Mn: 0,001 - 3%, Al: 0,0001 - 4%, P: 0,0001 - 0,3%, S: 0,0001 - 0,1%, et optionnellement un ou plusieurs des éléments suivants : Nb, Ti, V, Zr, Hf et Ta au total entre 0,001 to 1%, B: 0,0001 à 0,1%, Mo: 0,001 à 5%, Cr: 0,001 à 25%, Ni: 0,001 à 10%, Cu: 0,001 à 5%, Co: 0,001 à 5%, W: 0,001 à 5%, et Y, REM, Ca, Mg et Ce au total entre 0.0001 et 1%, le reste étant constitué de fer et d'impuretés inévitables. La microstructure revendiquée est constituée de 50 à 97% de ferrite ou de l'ensemble ferrite+bainite comme structure principale et d'austénite comme seconde phase avec une teneur comprise entre 3 et 50% en volume total. L'enseignement de ce document ne permet pas de former une tôle nécessitant une résistance mécanique particulière associée à une forte ductilité pour former une pièce complexe et revêtue destinée à une structure automobile. On connaît aussi le document US5,470,529 qui décrit la fabrication de tôle d'aciers présentant une bonne combinaison de résistance et d'expansion de trou, de composition contenant 0,05-0,3%C, moins de 1,0% de Si, 0,05-4%Mn, 0,1-2%Al avec Si+Al=0,5-3%, 0-2,0%Cu, 0-1,0Ni%, avec Ni≥Cu/3. 0-5,0%Cr, 0-0,01%Ca, 0-0,10%Zr, 0-0,10%Nb, 0-0,10%Ti, 0-0,20%V, la structure contenant au moins 5% d'austénite résiduelle. Ce document ne donne cependant pas d'information sur la morphologie des composés M-A nécessaire en vue d'obtenir une excellente résistance à la propagation des fissures.

On connaît aussi le document EP1865 085 qui décrit la fabrication de tôles revêtues d'acier contenant 0,06-0,6%C, 0,1-2%Si, 0,01-3%Al, avec Si+Al compris entre 1. et 4%, 1-6%Mn, avec Si/Mn<0,4, la surface de la tôle contenant plus de 10 oxydes composites/mm$^2$ ayant un rapport Mn/Si>0,5 et une dimension maximale de 0,01 à 5 $\mu$m, ayant moins de 10% de taux de recouvrement superficiel d'oxyde contenant majoritairement du silicium. Selon ce document, l'austénite résiduelle doit être présente sous forme de lattes, c'est-à-dire avec un facteur d'allongement élevé.

On connaît également la publication d'A. Wasilkowska et al. « Microstructure and tensile behaviour of cold-rolled TRIP-aided steels », Journal of Materials Processing Technology, 157-158, 2004. Ce document est cependant relatif à des tôles d'acier TRIP non revêtues, dont la résistance mécanique est limitée à 700 MPa.

L'invention vise à produire une tôle d'acier revêtue de Zn ou d'alliage de Zn avec une combinaison des critères de formabilité, de revêtabilité et de soudabilité améliorée. En effet, une faible sensibilité à la fragilisation par le Zinc liquide lors de la pénétration de celui-ci au cours du soudage améliore le comportement en service de la pièce revêtue et soudée. Cette fragilisation s'explique par une fusion du revêtement à base de zinc ou d'alliage de zinc due aux fortes températures imposées par le soudage. Ce faisant, le Zn liquide pénètre aux joints de grains austénitiques de l'acier et fragilise ces derniers menant à une apparition prématurée de fissure dans les zones soumises à de fortes contraintes externes lors du soudage par point par exemple.

En ce sens, l'invention vise à mettre à disposition des tôles d'acier à « effet TRIP » présentant une résistance mécanique comprise entre 780 et 900 MPa conjointement avec un allongement à rupture supérieur à 19%. Ladite tôle doit être revêtable avec un revêtement de Zn ou d'alliage de Zn, et être peu sensible à la pénétration du Zn dans les joints de grain austénitique.

L'invention vise aussi à mettre à disposition un procédé de fabrication économique en évitant l'addition d'éléments d'alliage coûteux.

On peut fabriquer la tôle par tout procédé de fabrication adapté. On préfère cependant mettre en oeuvre un procédé de fabrication dont de faibles variations des paramètres n'entraînent pas de modifications importantes de la microstructure ou des propriétés mécaniques.

De façon plus particulièrement préférée, on cherche à mettre à disposition une tôle d'acier aisément laminable à froid, c'est à dire dont la dureté après l'étape de laminage à chaud est limitée de telle sorte que les efforts de laminage restent modérés lors de l'étape de laminage à froid.

A cet effet, l'invention a pour objet une tôle d'acier laminée à froid, recuite et revêtue de zinc ou d'alliage de zinc dont la composition comprend, les teneurs étant exprimées en poids,

$$0,17\% \leq C \leq 0,25\%$$

$$1,5\% \leq Mn \leq 2,0\%$$

$$0,50\% \leq Si \leq 1\%$$

$$0,50\% \leq Al \leq 1,2\%$$

$$B \leq 0,001\%$$

$$P \leq 0,030\%$$

$$S \leq 0,01\%$$

$$Nb \leq 0,030\%$$

$$Ti \leq 0,020\%$$

$$V \leq 0,015\%$$

$$Cu \leq 0,1\%$$

$$Cr \leq 0,150\%$$

$$Ni \leq 0,1\%$$

$$0\% \leq Mo \leq 0,150\%,$$

étant entendu que Si +Al $\geq$ 1,30%,
le reste de la composition étant constitué de fer et d'impuretés inévitables résultant de l'élaboration, la microstructure étant constituée, les teneurs étant exprimées en fraction surfacique, de 65 à 85 % de ferrite, ladite ferrite étant constituée de ferrite polygonale et de ferrite bainitique, de 15 à 35 % d'îlots de martensite et d'austénite résiduelle, ladite ferrite comprenant moins de 5% de ferrite non recristallisée, étant entendu que la teneur totale en austénite résiduelle est comprise entre 10 et 25% et que la teneur totale en martensite est inférieure ou égale à 10%, la taille moyenne desdits îlots de martensite et d'austénite résiduelle est inférieure à 1,3 micromètre, leur facteur de forme moyen étant inférieur à 3, ledit facteur de forme étant le ratio entre la longueur et la largeur maximale desdits îlots de martensite et d'austénite résiduelle, la résistance mécanique Rm est comprise entre 780 et 900 MPa inclus, et l'allongement à rupture A% est supérieur ou égal à 19%.

La tôle selon l'invention peut en outre présenter les caractéristiques suivantes, prises isolément ou en combinaison :

- la composition comprend, la teneur étant exprimée en poids,

$$0,19\% \leq C \leq 0,23\%$$

- la composition comprend, la teneur étant exprimée en poids,

$$1,6\% \leq Mn \leq 1,8\%$$

- la composition comprend, la teneur étant exprimée en poids,

$$0,7\% \leq Si \leq 0,9\%$$

- la composition comprend, la teneur étant exprimée en poids,

$$0,6\% \leq Al \leq 0,8\%$$

- la composition comprend, la teneur étant exprimée en poids,

$$0\% < B \leq 0,0005\%$$

- plus de 90% en proportion surfacique des îlots de Martensite et d'austenite résiduelle ont une taille inférieure ou égale à deux micromètres.

L'invention a également pour objet un procédé de fabrication d'une tôle laminée à froid, recuite et revêtue de zinc ou d'alliage de zinc comprenant les étapes selon lesquelles :

- On approvisionne un acier de compositions selon l'invention, puis
- On coule ledit acier sous forme de demi-produit; puis,
- On réchauffe ledit demi-produit à une température comprise entre 1150 et 1250°C, puis,
- On lamine à chaud ledit demi-produit réchauffé en achevant le laminage à une température de fin de laminage $T_{FL}$ supérieure ou égale à Ar3 pour obtenir une tôle, puis,
- On bobine ladite tôle laminée à chaud à une température Tbob comprise entre 500 et 600°C puis,
- On refroidit ladite tôle laminée à chaud jusqu'à la température ambiante, puis,

- Si nécessaire, on décape ladite tôle laminée à chaud, puis,
- On lamine à froid ladite tôle, puis,
- On réchauffe ladite tôle laminée à froid à une vitesse Vc comprise entre 1 et 30°C/s jusqu'à une température Tr pendant une durée tr supérieure ou égale à 15 secondes, lesdites températures et durées étant choisies afin d'obtenir une fraction surfacique comprise entre 35 et 70% d'austénite, le reste étant de la ferrite dite polygonale, puis,
- On refroidit ladite tôle laminée à froid jusqu'à une température Teg comprise entre 475 et 440°C à une vitesse Vref suffisamment rapide pour permettre d'éviter la formation de perlite, puis
- On maintient à la température d'égalisation Teg ladite tôle laminée à froid pendant une durée $t_{eg}$ comprise entre 20 et 120 secondes, puis,
- On revêt par immersion au trempé à chaud en continu ladite tôle laminée à froid dans un bain de zinc ou d'alliage de zinc, puis,
- On refroidit ladite tôle laminée à froid et revêtue jusqu'à la température ambiante.

Le procédé selon l'invention peut en outre présenter les caractéristiques suivantes, prises isolément ou en combinaison :

- la température de fin de laminage $T_{FL}$ est supérieure à 900°C.
- la température de fin de laminage $T_{FL}$ est supérieure ou égale à 920°C.
- le point de rosée lors du recuit à Tr pendant tr est compris entre -20°C et - 15°C.
- la température de recuit Tr est comprise entre Ac1+50°C et Ac3-50°C.
- la température de recuit Tr est comprise entre Ac1+50°C et Ac1+170°C.
- la durée $t_{eg}$ sera comprise entre 30 et 80 secondes de préférence.
- la durée $t_{eg}$ sera idéalement comprise entre 30 et 60 secondes

La tôle selon l'invention est apte au soudage par résistance par point.

L'invention a également pour objet l'utilisation d'une tôle laminée à froid recuite et revêtue, selon l'invention ou obtenue par un procédé selon l'invention pour la fabrication de pièces de structures ou de sécurité pour les véhicules terrestres à moteur.

D'autres caractéristiques et avantages de l'invention apparaîtront au cours de la description ci-dessous, donnée à titre d'exemple et faite en référence aux figures annexées ci-jointes selon lesquelles :

- La figure 1 présente les dimensions de l'éprouvette de traction utilisée pour mesurer les propriétés mécaniques, ces dimensions sont chiffrées dans le tableau 4.

- La figure 2 présente un exemple de microstructure d'une tôle d'acier selon l'invention avec en blanc les îlots MA et en noir la matrice comprenant la ferrite polygonale, et la bainite.

- La figure 3 présente un exemple de la distribution des facteurs de forme des îlots MA de l'invention selon leur longueur maximale respective.

Ainsi dans le cadre de l'invention, l'influence de la fraction d'austénite formée lors du maintien intercritique et sa combinaison avec la température d'égalisation sur le comportement mécanique final de la tôle d'acier a été révélée,

Le carbone joue un rôle important sur la formation de la microstructure et sur les propriétés mécaniques en termes de ductilité et de résistance via l'effet TRIP: au-dessous de 0,17% en poids, la résistance mécanique devient insuffisante. Au-delà de 0,25%, la soudabilité devient de plus en plus réduite alors que l'effet TRIP sera amélioré. De manière préférentielle, la teneur en carbone se trouvera entre 0,19 et 0,23% inclus.

Le manganèse est un élément durcissant par solution solide de substitution qui augmente la trempabilité et ralentit la précipitation de carbures. Une teneur minimale de 1.5 % en poids est nécessaire pour obtenir les propriétés mécaniques désirées. Cependant, au-delà de 2%, son caractère gammagène conduit à la formation d'une structure en bandes trop marquée pouvant nuire aux propriétés de mise en forme de la pièce de structure automobile, de plus la revêtabilité serait réduite. De manière préférentielle, la teneur en manganèse sera comprise entre 1,6 et 1,8% inclus.

La stabilisation de l'austénite résiduelle est rendue possible par l'addition de silicium et d'aluminium qui ralentissent considérablement la précipitation des carbures lors du cycle de recuit et plus particulièrement lors de la transformation bainitique. Cela va permettre l'enrichissement de l'austénite en carbone, menant à sa stabilisation à la température ambiante sur la tôle d'acier recuite. Par la suite, l'application d'une contrainte extérieure, de mise en forme par exemple, va conduire à la transformation de cette austénite en martensite. Cette transformation est à l'origine du bon compromis entre la résistance mécanique et la ductilité des aciers TRIP.

Le silicium est un élément qui durcit en solution solide de substitution. Cet élément joue, en outre, un rôle important dans la formation de la microstructure en ralentissant la précipitation des carbures lors du palier d'égalisation après le refroidissement primaire, ceci permet de concentrer le Carbone dans l'austénite résiduelle pour sa stabilisation. Le silicium joue un rôle effectif combiné avec celui de l'aluminium dont le meilleur résultat est obtenu, au regard des propriétés visées, au-delà de 0,50%. Cependant, une addition de silicium en quantité supérieure à 1% risque de nuire à l'aptitude au revêtement au trempé en favorisant la formation d'oxydes adhérents à la surface des produits : sa teneur doit être limitée à 1% en poids pour faciliter la revêtabilité au trempé. Préférentiellement, la teneur en silicium sera comprise entre 0,7 et 0,9% inclus. En outre, le silicium diminue la soudabilité : une teneur inférieure ou égale à 1% permet d'assurer simultanément une très bonne aptitude au soudage ainsi qu'une bonne revêtabilité.

L'aluminium joue un rôle important dans l'invention en ralentissant fortement la précipitation des carbures, son effet est combiné avec celui du silicium, étant entendu que les teneurs pondérales en silicium et en aluminium sont telles que : $Si+Al \geq 1.30\%$ afin de retarder suffisamment la précipitation des carbures et stabiliser l'austénite résiduelle. Cet effet est obtenu lorsque la teneur en aluminium est supérieure à 0,50%, et lorsque celle-ci est inférieure à 1,2%. Préférentiellement, celle-ci sera inférieure ou égale à 0,8% et supérieure ou égale à 0,6%. On considère en effet habituellement que des teneurs élevées en Al accroissent l'érosion des réfractaires et le risque de bouchage des busettes lors de la coulée de ['acier en amont du laminage. De plus l'aluminium ségrége négativement et, il peut mener à des macro-ségrégations. En quantité excessive, l'aluminium diminue la ductilité à chaud et augmente le risque d'apparition de défauts en coulée continue. Sans un contrôle poussé des conditions de coulée, les défauts de type micro et macro ségrégations donnent, in fine, une ségrégation centrale sur la tôle d'acier recuite. Cette bande centrale sera plus dure que sa matrice circonvoisine et nuira à la formabilité du matériau.

Au-delà d'une teneur en soufre de 0,01%, la ductilité est réduite en raison de la présence excessive de sulfures tels que MnS (sulfures de manganèse) qui diminuent l'aptitude à la déformation, c'est en effet une source d'initiation de fissures. En outre, c'est un élément résiduel dont on veut limiter la teneur.

Le phosphore est un élément qui durcit en solution solide mais qui diminue considérablement la soudabilité par points et la ductilité à chaud, particulièrement en raison de son aptitude à la ségrégation aux joints de grains ou à sa tendance à la co-ségrégation avec le manganèse. Pour ces raisons, sa teneur doit être limitée à 0,03% afin d'obtenir une bonne aptitude au soudage par points et une bonne ductilité à chaud. En outre, c'est un élément résiduel dont on veut limiter la teneur.

Le molybdène joue un rôle efficace sur la trempabilité, la dureté et retarde l'apparition de la bainite. Cependant, son addition accroît excessivement le coût des additions d'éléments d'alliage, ainsi pour des raisons économiques, sa teneur est limitée à 0,150% voire à 0,100%.

Le chrome, par son rôle sur la trempabilité, contribue également à retarder la formation de ferrite pro-eutectoïde. En outre cet élément est un durcissant par solution solide en substitutionnel, cependant, pour des raisons économiques, sa teneur est limitée à 0,150 % voire à 0,100% car c'est un élément d'alliage couteux.

Le nickel, qui est un puissant stabilisateur d'austénite, va promouvoir la stabilisation de cette dernière. Cependant, au delà de 0,1%, le coût de l'addition en éléments d'alliage est financièrement peu viable. La teneur en nickel est donc limitée à 0,1% pour des raisons économiques.

Le cuivre, qui est aussi un stabilisateur d'austénite, va promouvoir la stabilisation de cette dernière. Cependant, au delà de 0,1%, le coût de l'addition en éléments d'alliage devient financièrement prohibitif. La teneur en cuivre est donc limitée à 0,1 % pour des raisons économiques.

Le bore agit fortement sur la trempabilité de l'acier. Il limite l'activité du carbone, et limite les transformations de phase diffusives (transformation ferritique ou bainitique lors du refroidissement), poussant ainsi à la formation de phases durcissante telles que la martensite. Cet effet n'est pas souhaitable dans l'invention car on souhaite promouvoir la transformation bainitique afin de stabiliser l'austénite et éviter la formation d'une trop forte proportion surfacique de Martensite. Ainsi, la teneur en bore est limitée à 0,001%.

Les éléments de micro-alliage tels que le niobium, le titane et le vanadium sont respectivement limités aux teneurs maximales de 0,030%, 0,020% et 0,015% car ces éléments ont la particularité de former des précipités durcissant avec le carbone et/ou l'azote qui tendent aussi à réduire la ductilité du produit. En outre, ils retardent la recristallisation lors de l'étape de chauffe et maintient du recuit et affinent donc la microstructure, ce qui durcit aussi le matériau.

Le reste de la composition est constitué de fer et d'impuretés inévitables résultant de l'élaboration.

Les aciers à effet dit TRIP ont une microstructure comprenant des îlots d'austénite résiduelle et de martensite dits « îlots MA » ainsi que de la ferrite. Cette ferrite pouvant être dissociée en deux catégories: la ferrite dite intercritique qui est la ferrite polygonale, formée lors du maintien après la chauffe lors du recuit à Tr et la ferrite dite bainitique, exempte de carbures, formée, après le maintien, lors du refroidissement primaire et pendant le palier d'égalisation lors du recuit. Le terme « ferrite » englobera ces deux sous-catégories dans la suite. La martensite, présente dans la microstructure, n'est pas désirée mais sa présence est difficilement évitable.

Les propriétés avantageuses de la tôle selon l'invention sont obtenues grâce à la combinaison d'une microstructure comprenant de la ferrite polygonale, de la ferrite bainitique et des îlots d'austénite résiduelle et de la martensite avec une composition chimique particulière et définie dans les revendications.

**EP 2 718 469 B1**

On évitera, dans le cadre de l'invention, de former plus de 5% de ferrite non recristallisée. Cette proportion de ferrite non recristallisée est évaluée de la façon suivante: après avoir identifié la phase ferritique au sein de la microstructure, on quantifie le pourcentage surfacique de ferrite non recristallisée rapportée à la totalité de la phase ferritique. Cette ferrite non recristallisée présente très peu de ductilité, elle est source d'initiation de fissure lors de la mise en forme finale et ne permet pas d'obtenir les caractéristiques visées par l'invention.

Selon l'invention, la microstructure est constituée, les teneurs étant exprimées en fraction surfacique, de 65 à 85 % de ferrite, 15 à 35 % d'îlots de martensite et d'austénite résiduelle, étant entendu que la teneur totale en austénite résiduelle est comprise entre 10 et 25% et que la teneur totale en martensite est inférieure ou égale à 10% en proportion surfacique.

Une quantité d'îlots MA inférieure à 15% ne permet pas d'augmenter de façon significative la résistance à l'endommagement. Ainsi, l'allongement total de 19% ne serait pas atteint. De plus, les îlots MA étant durs, si leur teneur est inférieure à 15%, on risque de ne pas atteindre les 780 MPa visés. Au-delà de 35%, il faudrait une teneur en carbone élevée pour suffisamment la stabiliser et cela nuirait à la soudabilité de l'acier. Préférentiellement, la teneur massique en carbone de l'austénite résiduelle est supérieure à 0,8% afin d'obtenir suffisamment d'îlots MA stables à température ambiante. La ferrite permet dans le cadre de l'invention d'améliorer la ductilité, la présence de cette structure ductile est nécessaire afin d'atteindre les 19% d'allongement total visés. La ferrite bainitique permet de stabiliser l'austénite résiduelle.

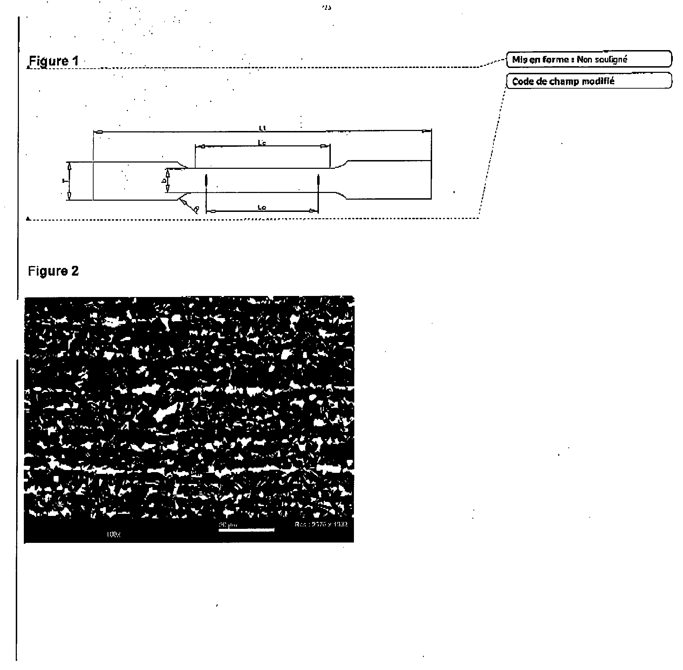

La figure 2 illustre une microstructure selon l'invention avec une image issue d'un microscope optique. Les îlots MA apparaissent en blanc et la ferrite est en noir. On ne distingue pas à ce stade la ferrite polygonale de la ferrite bainitique car le grossissement est trop faible et dans les deux cas, on a une structure cubique centrée du point de vue cristallographique. La principale différence étant que la ferrite bainitique a une densité de dislocations et une teneur en carbone supérieures à la ferrite inter-critique polygonale.

Par exemple, le procédé selon l'invention peut comporter les étapes successives suivantes :

On approvisionne un acier de composition selon l'invention puis on procède à la coulée d'un demi-produit à partir de cet acier. Cette coulée peut être réalisée en lingots ou en continu sous forme de brames

Les demi-produits coulés sont tout d'abord portés à une température $T_{rech}$ supérieure à 1150 °C et inférieure à 1250°C pour atteindre en tout point une température favorable aux déformations élevées que va subir l'acier lors du laminage. Cet intervalle de température permet d'être dans le domaine austénitique.

Cependant, si la température $T_{rech}$ est supérieure à 1275°C, les grains austénitiques croissent de façon indésirable et mèneront à une structure finale plus grossière.

- On lamine à chaud le demi-produit dans un domaine de température où la structure de l'acier est donc totalement austénitique : si la température de fin de laminage $T_{FL}$ est inférieure à la température de début de transformation de l'austénite en ferrite au refroidissement Ar3, les grains de ferrite sont écrouis par le laminage et la ductilité est considérablement réduite. Préférentiellement, on choisira une température de fin de laminage $T_{FL}$ supérieure à 900°C. De manière encore préférentielle, la température de fin de laminage $T_{FL}$ sera supérieure ou égale à 920°C.

- On bobine ensuite le produit laminé à chaud à une température $T_{bob}$ comprise entre 500 et 600°C. Cette gamme de température permet d'obtenir une transformation bainitique complète pendant le maintien quasi-isotherme associé au bobinage suivi d'un refroidissement lent. Une température de bobinage supérieure à 600°C conduit à la formation d'oxydes non désirés. Lorsque la température de bobinage est trop basse, la dureté du produit est augmentée, ce qui augmente les efforts nécessaires lors du laminage à froid ultérieur.

- On peut ensuite, si nécessaire, décaper le produit laminé à chaud selon un procédé connu en lui-même, puis on effectue un laminage à froid avec un taux de réduction compris préférentiellement entre 30 et 80%.

- On chauffe ensuite le produit laminé à froid, préférentiellement au sein d'une installation de recuit continu, avec une vitesse moyenne de chauffage Vc comprise entre 1 et 30°C/s. En relation avec la température de recuit $T_r$ ci-dessous, cette gamme de vitesse de chauffage permet d'obtenir une fraction de ferrite non recristallisée inférieure à 5%.

Le chauffage est effectué jusqu'à une température de recuit $T_r$, de préférence comprise entre la température Ac1 (température de début de transformation allotropique au chauffage) + 50°C, et Ac3 (température de fin de transformation allotropique au chauffage) -50°C, et pendant un temps $t_r$ choisis de telle sorte que l'on obtienne entre 35 et 70% d'austénite intercritique. Cela pourra notamment être obtenu en choisissant, par souci d'économie d'énergie, la

température $T_r$ entre Ac1+50°C et Ac1+170°C. Lorsque $T_r$ est inférieure à (Ac1+50°C), la structure peut comporter encore des zones de ferrite non recristallisée dont la fraction surfacique peut atteindre 5%, Une température de recuit $T_r$ selon l'invention permet d'obtenir une quantité d'austénite inter-critique suffisante pour former ultérieurement au refroidissement de la ferrite en quantité telle que l'austenite résiduelle sera suffisamment stabilisée et les caractéristiques mécaniques désirées seront atteintes.

Lorsque la fraction d'austénite inter-critique est supérieure à 70%, à la température Tr, sa concentration en carbone est faible, cela conduit à une transformation ultérieure trop rapide et trop abondante en ferrite polygonale et bainitique respectivement lors du refroidissement et du palier d'égalisation entre 440 et 475°C. La ferrite étant une phase peu dure, sa présence en trop grande quantité ne permettra pas d'atteindre la cible de 780 MPa et d'avoir un allongement total ≥ 19%.

La durée de maintien $t_{rec}$ est comprise entre 15 et 300s. Une durée de maintien minimale $t_r$ supérieure ou égale à 15 secondes à la température Tr permet la dissolution des carbures, et surtout une transformation suffisante en austénite. L'effet est saturé au delà d'une durée de 300 s. Un temps de maintien supérieur à 300s est également difficilement compatible avec les exigences de productivité des installations de recuit continu, en particulier la vitesse de défilement de la bobine

A la fin du maintien de recuit, on refroidit la tôle jusqu'à atteindre une température proche de la température $T_{eg}$, la vitesse de refroidissement $V_{ref}$ étant suffisamment rapide pour éviter toute transformation au refroidissement et particulièrement la formation de la perlite avide de carbone. A cet effet, la vitesse de refroidissement Vref est préférentiellement supérieure à 5°C/s. Une transformation partielle de l'austénité en ferrite intervient à ce stade. Celle-ci permet, lors de l'expulsion du C vers l'austénite, celui-ci étant peu soluble dans la ferrite, de stabiliser cette dernière pour promouvoir l'effet TRIP.

Le maintien dans la gamme de température 440°C à 475°C doit être supérieur à 20 secondes afin de permettre la stabilisation de l'austénite par enrichissement en carbone de ladite austénite, et inférieur à 120s de façon à limiter la proportion surfacique de ferrite et limiter au maximum la précipitation de carbures. En effet au-delà de 120 secondes, la cementite $Fe_3c$ précipite et réduit de ce fait la teneur en carbone disponible pour l'effet TRIP à partir de l'austénite résiduelle. Ainsi on obtient, à la fois une faible résistance mécanique du fait d'une austénite qui se décompose et est allégée en carbone et un faible allongement du fait d'un effet TRIP avec une austénite moins stable car moins riche en carbone. Cette austénite présentera des îlots qui se transformeront en martensite de manière prématurée lors d'une sollicitation mécanique. La martensite étant peu ductile, l'allongement total de l'acier va être réduit.

De manière préférentielle, la durée de maintien $t_{eg}$ à la température $T_{eg}$ sera comprise entre 30 et 80 secondes. Idéalement, elle sera comprise entre 30 et 60 secondes pour avoir un effet optimal sur la microstructure et les propriétés mécaniques.

On effectue ensuite la galvanisation au trempé par immersion dans un bain de zinc ou d'alliage de zinc dont la température $T_{Zn}$ peut être comprise entre 440 et 475°C.

Par exemple, la composition du bain de Zinc ou d'alliage de Zn pouvant être telle que :

Al(%) +Fe(%) +10 (Pb+Cd) < 0,55%, le complément à 100% étant constitué de Zn.

On refroidit ensuite le produit galvanisé à une vitesse $V_{ref2}$ supérieure à 2°C/s jusqu'à la température ambiante. On obtient de la sorte une tôle d'acier laminée à froid, recuite et galvanisée comprenant en proportion surfacique 65 à 85 % de ferrite et 15 à 35% d'îlots de Martensite et d'austénite résiduelle, étant entendu que la teneur en austénite résiduelle est comprise entre 10 et 25%.

Afin de promouvoir le phénomène d'oxydation interne des éléments facilement oxydables tels que le manganèse, l'aluminium et le silicium et faciliter ainsi le dépôt du revêtement à base de zinc sur la tôle, le recuit dans le four après le laminage à froid est effectué avec un point de rosée élevé, c'est-à-dire avec une augmentation du flux d'oxygène dans le métal.

En effet, lorsque le recuit est effectué dans une atmosphère ayant un point de rosée de -40°C ou moins, le produit présente une mouillabilité rédhibitoire et le zinc déposé ne couvre pas à cent pour cent la surface de la tôle. De plus, une mauvaise adhérence du revêtement à base de zinc a pu être mise en évidence avec ce point de rosée à -40°C.

Par contre, avec un point de rosée compris entre -20°C et -15°C, la mouillabilité et l'adhérence du revêtement à base de zinc seront considérablement améliorées.

Les procédés de revêtement par électro-zingage ou le dépôt par PVD pour « Physical Vapor Deposition» conviennent aussi.

La présente invention va être maintenant illustrée à partir des exemples suivants donnés à titre non limitatif :

On a élaboré des aciers dont la composition figure au tableau ci-dessous, exprimée en pourcentage pondéral. Les aciers IX1, IX2, IX3 et IX4 ayant servis à la fabrication de tôles selon l'invention, on a indiqué, à titre de comparaison la composition des aciers R1 à R6 ayant servi à la fabrication de tôles de référence.

Tableau 1 Compositions d'aciers (% poids). $R_i$= Références n°i

| Acier | C (%) | Mn (%) | Si (%) | Al (%) | Si+Al (%) | B (%) | P (%) | S (%) | Nb (%) | Ti (%) | Cu (%) | Cr (%) | Ni (%) | Mo (%) | N (%) |
|---|---|---|---|---|---|---|---|---|---|---|---|---|---|---|---|
| IX1 | 0,215 | 1,670 | 0.805 | 0,695 | 1,500 | 0,0004 | 0,0086 | 0,0018 | 0,0006 | 0,0051 | 0,020 | 0,038 | 0,0174 | 0.0020 | 0,0045 |
| LX2 | 0,170 | 1,750 | 0,775 | 0,605 | 1,360 | 0,0002 | 0,023 | 0,0024 | 0,001 | 0,002 | 0,006 | 0,012 | 0,020 | 0,015 | 0,0007 |
| IX3 | 0,205 | 1,780 | 0,775 | 0,705 | 1,460 | 0,0003 | 0,025 | 0,0023 | 0,001 | 0,002 | 0,005 | 0,012 | 0,016 | 0,003 | 0,0007 |
| IX4 | 0,170 | 1,622 | 0,727 | 0,840 | 1,667 | 0,0002 | 0,016 | 0,0021 | 0,030 | 0,0045 | 0,024 | 0,025 | 0,021 | 0,002 | 0,0004 |
| R1 | 0,175 | 1,615 | 0,326 | 1,225 | 1,551 | 0,00035 | 0,08 | 0,0020 | 0,0003 | 0,0120 | 0,017 | 0,020 | 0,021 | 0,0019 | 0,0042 |
| R2 | 0,200 | 1,647 | 1,599 | 0,035 | 1,634 | 0,0003 | 0,010 | 0,004 | 0,001 | 0,0020 | 0,008 | 0,015 | 0,019 | 0,0020 | 0,0043 |
| R3 | 0,160 | 1,720 | 0,775 | 0,605 | 1,360 | 0,0002 | 0,025 | 0,0021 | 0,003 | 0,002 | 0,006 | 0,012 | 0,018 | 0,015 | 0,0004 |
| R4 | 0,155 | 1,611 | 0,793 | 0,797 | 1,580 | 0,0003 | 0,019 | 0,0011 | 0,001 | 0,012 | 0,001 | 0,003 | 0,001 | 0,001 | 0,00011 |
| R5 | 0,159 | 1,593 | 0,806 | 0,765 | 1,591 | 0,0001 | 0,023 | 0,0015 | 0,003 | 0,044 | 0,001 | 0,009 | 0,001 | 0,009 | 0,0003 |
| R6 | 0,166 | 1,605 | 0,722 | 0,835 | 1,557 | 0,0004 | 0,017 | 0,001 | 0,041 | 0,0045 | 0,024 | 0,025 | 0,020 | 0,005 | 0,0004 |
| Valeurs soulignées : Non conformes à l'invention. | | | | | | | | | | | | | | | |

EP 2 718 469 B1

Des demi-produits coulés correspondant aux compositions ci-dessus ont été coulés, réchauffés à 1230°C puis laminés à chaud dans un domaine où la structure est entièrement austénitique. Les conditions de fabrication de ces produits laminés à chaud (température de fin de laminage $T_{FL}$ et température de bobinage $T_{bob}$) sont indiquées au tableau 2.

Tableau 2 : Conditions de fabrication des produits laminés à chaud

| Acier | $T_{FL}$(°C) | Ar3 (°C) | $T_{bob}$(°C) |
|-------|------|------|------|
| IX1 | 920 | 713 | 580 |
| IX2 | >920 | 716 | 550 |
| IX3 | >920 | 702 | 550 |
| IX4 | >920 | 726 | 535 |
| R1 | 910 | 726 | 550 |
| R2 | 915 | 715 | 540 |
| R3 | 922 | 721 | 560 |
| R4 | >920 | 774 | 540 |
| R5 | >920 | 690 | 540 |
| R6 | >920 | 687 | 540 |

Les produits laminés à chaud ont tous été ensuite décapés puis laminés à froid avec un taux de réduction compris entre 30 et 80%. A partir d'une même composition, certains aciers ont fait l'objet de différentes conditions de fabrication.

Le tableau 3 indique les conditions de fabrication des tôles recuites après laminage à froid :

- Vitesse de chauffage Vc
- Teneur en austénite initiale à la fin du maintien (intercritique) $V_{init}$
- Température de recuit Tr
- Temps de maintien au recuit $t_r$
- Vitesse de refroidissement après recuit Vref
- Vitesse de refroidissement après galvanisation V'ref
- Température d'égalisation $T_{eg}$
- Durée sur le palier d'égalisation $t_{eg}$

Les températures de transformation Ac1 et Ac3 ont également été portées au tableau 3.

On a également déterminé la microstructure des aciers TRIP avec quantification de la teneur en austénite résiduelle. Les fractions surfaciques d'îlots MA ont été quantifiées après attaque de type métabisulfite, Klemm ou Lépera, suivies par une analyse d'image grâce au logiciel Aphelion™

Les tôles ont toutes été revêtues de Zn.

Les températures de fin de laminage ont été estimées dans certains cas mais celles-ci restent comprises entre 900 et 1000°C quand il est mentionné qu'elles sont supérieures à 920°C.

L'inscription « n.e » signifie « non-évalué ».

Tableau 3 : Conditions de fabrications des tôles laminées à froid et recuites

| Essai | Composition d'acier | Vc (°C/s) | $A_{c1}$-$A_{c3}$ (°C) | Tr (°C) | $t_r$ (s) | $Y_{init}$ (%) | $V_{ref}$ (°C/s) | $T_{eg}$ (°C) | $t_{eg}$ (S) | V'ref (°C/s) |
|-------|------|------|------|------|------|------|------|------|------|------|
| 1 | IX1 | 4 | 729-920 | *815* | 45 | 37 | 35 | 460 | 45 | 5 |
| 2 | IX1 | 4 | 729-920 | 850 | 45 | 62 | 35 | 460 | 45 | 5 |
| 3 | IX1 | 5 | 729-920 | 770 | 45 | 25 | 35 | 460 | 45 | 5 |
| 4 | IX1 | 4,4 | 729-920 | 840 | 55 | 60 | 55,5 | 430 | 180 | 8,7 |

(suite)

| Essai | Composition d'acier | Vc (°C/s) | $A_{c1}$-$A_{c3}$ (°C) | Tr (°C) | $t_r$ (s) | $Y_{init}$ (%) | $V_{ref}$ (°C/s) | $T_{eg}$ (°C) | $t_{eg}$ (S) | V'ref (°C/s) |
|---|---|---|---|---|---|---|---|---|---|---|
| 5 | IX2 | 4.4 | 721-1059 | 800 | 67 | 30 | 34 | 460 | 43 | 5 |
| 6 | IX2 | 4,4 | 727-1059 | 830 | 67 | 35 | 34 | 480 | 43 | 5 |
| 7 | IX3 | 4,4 | 729-1090 | 800 | 67 | 35 | 34 | 460 | 43 | 6 |
| 8 | IX3 | 4,4 | 729-1090 | 830 | 67 | 40 | 34 | 460 | 43 | 5 |
| 9 | IX4 | 4,4 | 727-1154 | 780 | 67 | 30 | 34 | 460 | 43 | 5 |
| 10 | IX4 | 4,4 | 727-1154 | 820 | 67 | 35 | 34 | 460 | 43 | 5 |
| 11 | IX4 | 4,4 | 727-1154 | 850 | 67 | 40 | 34 | 460 | 43 | 5 |
| 12 | IX4 | 3 | 727-1154 | 800 | 128 | 32 | 21 | 460 | 314 | 6 |
| 13 | R1 | 6 | 729-1115 | 850 | 39 | 40 | 47 | 460 | 33 | 7 |
| 14 | R1 | 6 | 720-1115 | 770 | 39 | 24 | 44 | 460 | 33 | 6 |
| 15 | R2 | 4 | 752-875 | 830 | 46 | 50 à 65 | 32 | 460 | 45 | 4,4 |
| 16 | R2 | 3 | 752-875 | 830 | 118 | 50 à 65 | 37 | 400 | 270 | 87 |
| 17 | R3 | 5.5 | 726-1050 | 830 | 37 | 40 à 55 | 40 | 460 | 36 | 6 |
| 18 | R3 | 4,4 | 726-1050 | 830 | 37 | 40 à 55 | 56 | 420 | 180 | 6 |
| Valeurs soulignées : non conformes à l'invention | | | | | | | | | | |

Tableau 3 (suite): Conditions de fabrications des tôles laminées à froid et recuites

| Essai | Composition d'acier | Vc (°C/s) | $\gamma_{init}$ (%) | Tr | $A_{c1}$-$A_{c3}$ (°C) | $t_r$ (s) | $V_{ref}$ (°C/s) | $T_{eg}$ (°C) | $t_{eg}$ (s) | V'ref (°C/s) |
|---|---|---|---|---|---|---|---|---|---|---|
| 19 | R4 | 5,5 | 20 | 780 | 729-1149 | 36 | 43 | 460 | 34 | 5,5 |
| 20 | R4 | 5,5 | 25 | 850 | 729-1149 | 36 | 43 | 460 | 34 | 5,5 |
| 21 | R5 | 5,5 | 20 | 780 | 717-1138 | 36 | 43 | 460 | 34 | 5,5 |
| 22 | R5 | 5,5 | 25 | 850 | 717-1138 | 36 | 43 | 460 | 34 | 5,5 |
| 23 | R6 | 5,5 | 20 | 780 | 714-1147 | 36 | 43 | 460 | 34 | 5,5 |
| 24 | R6 | 5,5 | 25 | 850 | 714-1147 | 36 | 43 | 460 | 34 | 5.5 |
| Valeurs soulignées : non conformes à l'invention | | | | | | | | | | |

Les propriétés mécaniques de traction obtenues (limite d'élasticité Re, résistance Rm, allongement à rupture A ont été portées au tableau 5 ci-dessous. Celles-ci sont obtenues en utilisant une éprouvette de type ISO 20x80 avec les dimensions du tableau 4 illustrées dans la figure 1. Les tractions uni-axiales permettant d'obtenir ces propriétés mécaniques étant faites dans le sens perpendiculaire à celui du laminage à froid.

Tableau 4: Dimensions des éprouvettes de traction, les unités étant exprimées en mm (la figure 1 illustre les longueurs mentionnées)

| Type | b | Lo | Lc | R | T | Lt | Dimensions ébauche |
|------|---|----|----|---|---|----|--------------------|
| ISO 20x80 | 20 | 80 | 100 | 20 | 30 | 260 | 260 x 32 |

L'aptitude à la revêtabilité a été quantifiée de la façon suivante : une tôle est pliée à bloc à 180°, puis, sur la surface extérieure pliée est appliqué un scotch, lors du retrait du scotch, si le revêtement est adhérent, le revêtement n'est pas arraché. Si le revêtement n'est pas adhérent, le revêtement s'arrache avec le scotch.

De même la sensibilité à la fragilisation par pénétration de Zn liquide est évaluée par un test de soudage sur pièce revêtue de Zn. Le test consistant à observer au microscope les fissures et leur profondeur selon le matériau et le procédé utilisé, le classement est ensuite fait en relatif.

Pour ces deux tests, la cotation est exprimée de 1 (mauvaise revêtabilité/ sensible au Zn liquide) à 5 (très bonne aptitude à la revêtabilité/peu sensible au Zn liquide) Des résultats cotés 1-2 sont considérés comme non satisfaisants.

Tableau 5 Résultats obtenus sur les tôles laminées à froid et recuites

| Tôle d'acier | Fraction (MA %) | Re (MPa) | Rm (MPa) | A (%) | Sensibilité au Zn liquide | Revêtabilité au Zn liquide au | Longueur moyenne des îlots MA (μm) |
|--------------|-----------------|----------|----------|-------|---------------------------|-------------------------------|-------------------------------------|
| 1 | 19 | 444 | 796 | 27 | 3 | 5 | 1,06 |
| 2 | 22 | 445 | 787 | 27 | 3 | 5 | 1,06 |
| 3 | ≤15 | 425 | 735 | 28 | 3 | 5 | n.e |
| 4 | ≤15 | 460 | 730 | 32 | 3 | 5 | n.e |
| 5 | 16<X<21 | 376 | 802 | 22 | 4 | 5 | <1.3 |
| 6 | 15<X<21 | 380 | 805 | 22 | 4 | 5 | <1,3 |
| 7 | 15<X<21 | 389 | 844,5 | 19 | 3 | 5 | 1,04 |
| 8 | 15<X<21 | 386 | 829 | 20 | 3 | 5 | 1,04 |
|   |   |   |   |   |   |   |   |
| 9 | 15<X<21 | 560 | 889 | 20 | 4 | 5 | <1,1 |
| 10 | 15<X<21 | 568 | 860 | 19 | 4 | 5 | <1,1 |
| 11 | 15<X<21 | 557 | 861 | 19 | 4 | 5 | <1,1 |
| 12 | 15<X<21 | 577 | 857 | 15,3 | 4 | 5 | <1,1 |
| 13 | 15 | 475 | 735 | 27 | 4 | 5 | n.e |
| 14 | 13 | 429 | 684 | 29 | 4 | 5 | n.e |
| 15 | >22 | 437 | 933 | 21.6 | 2 | 2 | 1,6 |
| 16 | 20 | 540 | 820 | 31 | 2 | 2 | 1,74 |
| 17 | ≤15 | 474 | 735 | 24 | 3 | 5 | n.e |
| 18 | ≤15 | 450 | 705 | 25,4 | 3 | 5 | n.e |
| 19 | ≤15 | 411 | 737 | 27 | 4 | 5 | n.e |
| 20 | ≤15 | 426 | 729 | 28 | 4 | 5 | n.e |
| 21 | ≤15 | 700 | 963 | 15 | 4 | 5 | n.e |
| 22 | ≤15 | 640 | 875 | 17 | 4 | 5 | n.e |
| 23 | ≤15 | 555 | 869 | 14 | 4 | 5 | n.e |

(suite)

| Tôle d'acier | Fraction (MA %) | Re (MPa) | Rm (MPa) | A (%) | Sensibilité au Zn liquide | Revêtabilité au Zn liquide au | Longueur moyenne des îlots MA ($\mu$m) |
|---|---|---|---|---|---|---|---|
| 24 | $\leq$15 | 557 | 880 | 18 | 4 | 5 | n.e |
| Valeurs soulignées : non conformes à l'invention | | | | | | | |

Les tôles d'aciers selon l'invention présentent un ensemble de caractéristiques microstructurales et mécaniques permettant la fabrication avantageuse de pièces, notamment pour des applications de pièces de structure : résistance comprise entre 780 et 900 MPa, allongement à rupture supérieur à 19% avec une éprouvette de type ISO 20x80 tel que décrit par le tableau 4, bonne aptitude à la revêtabilité et peu sensible à la fragilisation par la pénétration du Zinc liquide. La figure 2 illustre la morphologie de la tôle d'acier 1 avec les îlots MA en blanc.

Les tôles IX1, IX2, IX3 et IX4 sont conformes à l'invention du point de vue de la composition chimique. Les essais associés à ces compositions allant de 1 à 12 permettent de montrer la stabilité des propriétés obtenues et de démontrer les limites du procédé de fabrication pour obtenir la tôle de l'invention.

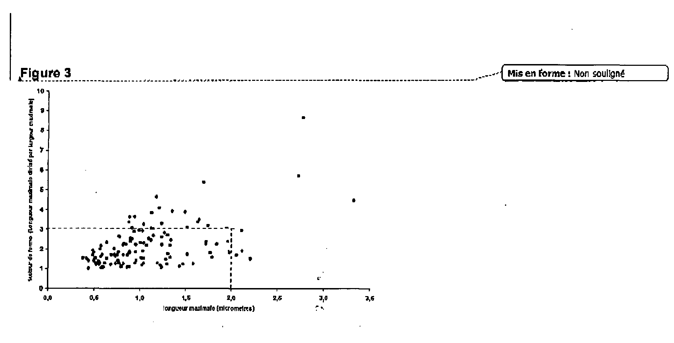

Les compositions chimiques IX1, IX2, IX3 et IX4 associés aux essais selon l'invention (1,2, et 5 à 11 inclus) sont peu sensibles à la pénétration du zinc liquide, notamment lors du soudage par résistance par points. Ceux-ci présentent une bonne revêtabilité et des îlots MA qui ont, de manière surprenante, une moyenne de 1,06 micromètre, donc des grains fins. En outre, leur résistance mécanique est comprise entre 780 et 900 MPa et leur allongement total est largement supérieur à 19%. La figure 2 illustre la microstructure de la tôle de l'essai 1. Chaque îlot de Martensite/Austénite dit « îlot MA » est caractérisé par sa longueur maximale et sa largeur maximale. Sur la base d'un échantillon représentatif de plus de 100 îlots caractérisés, la moyenne de la longueur des îlots est étonnamment basse et égale à 1.06 micromètres. L'intervalle de confiance est de 95% pour avoir une moyenne située entre 0,97 et 1.15 micromètres. Le plus petit îlot a été mesuré à 0.38 micromètre et le plus long à 3.32 micromètres. Le premier quartile, soit le plus grand îlot des 25% d'îlots les plus petits, a été mesuré à 0.72 micromètre; tandis que le troisième quartile, soit le plus petit des 25% d'îlots les plus longs, a été mesuré à 1.29 micromètres. La médiane a été calculée à 0.94 micromètres. La proximité entre la médiane et la moyenne est un bon indicateur que les données présentent une distribution centrée sur une longueur de 1 micromètre à 0,1$\mu$m près. Les îlots MA sont aussi caractérisés par leur facteur de forme, c'est-à-dire le ratio entre leur longueur et leur largeur maximale $\frac{L_{max}}{L_{min}}$ . Les îlots MA de l'essai 1 ont une distribution de facteur de forme représentée par la figure 3. La moyenne des facteurs de forme est de 2.15. L'intervalle de confiance est de 95% pour avoir une moyenne de facteur de forme située entre 1.95 et 2.34.

L'essai 3 associé à la composition chimique IX1 a une teneur en austénite à la fin du maintien $\gamma_{init}$ trop faible car la température de maintien est en dessous de Ac1+50°C, en conséquence, la fraction surfacique d'îlots MA finale est trop faible et cette caractéristique microstructurale est associée à une diminution de la résistance mécanique dans le cadre de l'invention. L'essai 4 associé à la composition chimique IX1 a vu un recuit à une température permettant d'obtenir 60% d' $\gamma_{init}$ et se trouve donc dans l'intervalle revendiqué par l'invention. Cependant la température de galvanisation Teg est de 430°C, elle est donc trop basse et le temps d'égalisation $t_{eg}$ est de 180 secondes ce qui est trop long. Ainsi, la fraction surfacique desdits îlots est trop faible et la conséquence est une résistance mécanique inférieure à 780 MPa.

L'essai 12, associé à la composition chimique IX4, a vu un palier d'égalisation $t_{eg}$ de 314 secondes, ce qui est au-dessus de la spécification dans le cadre de l'invention qui est de 120 secondes, ainsi l'allongement. total est trop faible à 15,3%.

R1 présente une composition chimique sortant de la cible de l'invention. En effet R1 présente une teneur en Si trop faible est une teneur en phosphore trop élevée. Ainsi les essais 13 et 14 présentent des propriétés de résistance mécaniques non satisfaisantes par rapport aux cibles de l'invention car en dessous de 780 MPa malgré un respect des conditions de fabrication pour l'essai 13. L'essai 14 présente aussi une température de recuit $T_r$ inférieure à Ac1+50°C.

Les compositions chimiques R3 et R4 sont non conformes à l'invention car les teneurs massiques en carbone sont inférieures à 0,17%. Les essais 17,18, 19 et 20 associés à R3 (17 et 18) et R4 (19 et 20) ne permettent pas d'atteindre 780 MPa. Les fractions d'îlots MA obtenues à la fin dudit recuit sont trop faible car il n'y a pas assez de carbone pour stabiliser l'austénite et former suffisamment d'îlots MA. La teneur de ces derniers est donc trop faible et par conséquent la résistance mécanique est inférieure à 780 MPa pour ces essais.

La composition chimique R2 est non conforme à l'invention car la teneur en Si est supérieure à 1% et celle en aluminium inférieure à 0,5%. Deux essais sont issus de cette composition chimique, les essais 15 et 16. L'essai 15 ne correspond pas à l'invention malgré un cycle de recuit correspondant à la revendication. La fraction d'îlots MA à la fin dudit recuit est trop élevée du fait du double effet durcissant du silicium et de son pouvoir ferritisant inférieur à celui de l'Aluminium. En effet, la ferrite est une structure molle comparée aux îlots MA et l'utilisation des éléments ferritisant adoucit la tôle d'acier, l'aluminium aurait ici servi à rééquilibrer les duretés pour obtenir une tôle dont la résistance mécanique est inférieure à 900 MPa. Ainsi, la résistance mécanique de la tôle d'acier 15 est supérieure à 900 MPa et la taille moyenne des îlots MA est nettement supérieure à 1,3 micromètres. Pareille taille de grain va faciliter la connectivité entre les grains et accélérer la propagation d'une fissure déjà formée. En outre, la sensibilité à la pénétration du Zinc (2/5) liquide de cette référence est inférieure au minimum visé pour l'invention (3/5).

L'essai 16 ne correspond pas à l'invention, la taille moyenne des îlots MA est largement au-dessus de 1,3 micromètres. En outre, la teneur en silicium va mener à la formation d'oxydes de silicium en surface lors du recuit avant la galvanisation au trempé. Ainsi la revêtabilité de ce produit sera inférieure à la note minimum visée de 3 sur 5. Sa sensibilité à la pénétration du zinc liquide est aussi inférieure à 3 sur 5.

La composition chimique R5 ne correspond pas à l'invention. La teneur en carbone est inférieure à 0,17% et la teneur en Ti est supérieure à 0,020%. On obtient, comme montré par les essais 21 et 22, que l'on n'atteint pas la cible d'allongement de 19%.

La composition chimique R6 ne correspond pas à l'invention car la teneur en niobium est supérieure à 0,030%. Les exemples 23 et 24 montrent que l'on n'atteint pas la cible d'allongement de 19%.

Les tôles d'aciers selon l'invention seront utilisées avec profit pour la fabrication de pièces de structures ou de sécurité dans les véhicules terrestres à moteur. Les exemples suivant sont donnés à titre non imitatif : traverses, longerons, pied milieu.

## Revendications

1. Tôle d'acier laminée à froid revêtue de zinc ou d'alliage de zinc dont la composition comprend, les teneurs étant exprimées en poids,

$$0,17\% \leq C \leq 0,25\%$$

$$1,5\% \leq Mn \leq 2,0\%$$

$$0,50\% \leq Si \leq 1\%$$

$$0,50\% \leq Al \leq 1,2\%$$

$$B \leq 0,001\%$$

$$P \leq 0,030\%$$

$$S \leq 0,01\%$$

$$Nb \leq 0,030\%$$

$$Ti \leq 0,020\%$$

$$V \leq 0,015\%$$

$$Cu \leq 0,1\%$$

$$Cr \leq 0,150\%$$

$$Ni \leq 0,1\%$$

$$0\% \leq Mo \leq 0,150\%,$$

étant entendu que Si +Al $\geq$ 1,30%.
le reste de la composition étant constitué de fer et d'impuretés inévitables résultant de l'élaboration,
la microstructure est constituée, les teneurs étant exprimées en fraction surfacique :

- de 65 à 85 % de ferrite, ladite ferrite étant constituée de ferrite polygonale et de ferrite bainitique et,
- de 15 à 35 % d'îlots de martensite et d'austénite résiduelle,

ladite ferrite comprenant moins de 5% de ferrite non recristallisée, étant entendu que la teneur totale en austénite résiduelle est comprise entre 10 et 25% et que la teneur totale en martensite est inférieure ou égale à 10%, la taille moyenne desdits îlots de martensite et d'austénite résiduelle est inférieure à 1,3 micromètre, leur facteur de forme moyen étant inférieur à 3, ledit facteur de forme étant le ratio entre la longueur et la largeur maximale desdits îlots de martensite et d'austénite résiduelle,
la résistance mécanique Rm de la tôle est comprise entre 780 et 900 MPa inclus, et l'allongement à rupture A% est supérieur ou égal à 19%,

2. Tôle d'acier selon la revendication 1, dont la composition comprend, la teneur étant exprimée en poids,

$$0,19\% \leq C \leq 0,23\%$$

3. Tôle d'acier selon la revendication 1 ou la revendication 2, dont la composition comprend, la teneur étant exprimée en poids,

$$1,6\% \leq Mn \leq 1,8\%.$$

4. Tôle d'acier selon l'une quelconque des revendications 1 à 3, dont la composition comprend, la teneur étant exprimée en poids,

$$0,7\% \leq Si \leq 0,9\%$$

5. Tôle d'acier selon l'une quelconque des revendications 1 à 4, dont la composition comprend, la teneur étant exprimée en poids,

$$0,6\% \leq Al \leq 0,8\%$$

6. Tôle d'acier selon l'une quelconque des revendications 1 à 5, dont la composition comprend, la teneur étant exprimée en poids,

$$0\% < B \leq 0,0005\%$$

7. Tôle d'acier selon l'une quelconque des revendications 1 à 6, dont, plus de 90% en proportion surfacique desdits îlots de Martensite et d'austenite résiduelle ont une taille inférieure ou égale à deux micromètres.

8. Procédé de fabrication d'une tôle laminée à froid et revêtue de zinc ou d'alliage de zinc comprenant les étapes selon lesquelles :

- On approvisionne un acier de composition selon l'une quelconque des revendications 1 à 7, puis
- On coule ledit acier sous forme de demi-produit, puis,
- On réchauffe ledit demi-produit à une température comprise entre 1150 et 1250°C, puis,
- On lamine à chaud ledit demi-produit réchauffé en achevant le laminage à une température de fin de laminage $T_{FL}$ supérieure ou égale à Ar3 pour obtenir une tôle, puis,
- On bobine ladite tôle laminée à chaud à une température Tbob comprise entre 500 et 600°C puis,
- On refroidit ladite tôle laminée à chaud jusqu'à la température ambiante, puis,
- Si nécessaire, on décape ladite tôle laminée à chaud, puis,
- On lamine à froid ladite tôle, puis,
- On réchauffe ladite tôle laminée à froid à une vitesse Vc comprise entre 1 et 30°C/s jusqu'à une température Tr pendant une durée tr supérieure ou égale à 15 secondes, lesdites températures et durées étant choisies afin d'obtenir une fraction surfacique comprise entre 35 et 70% d'austénite, puis,
- On refroidit ladite tôle laminée à froid jusqu'à une température Teg comprise entre 475 et 440°C à une vitesse Vref suffisamment rapide pour permettre d'éviter la formation de perlite, puis
- On maintient à la température d'égalisation Teg ladite tôle laminée à froid pendant une durée $t_{eg}$ comprise entre 20 et 120 secondes, puis,
- On revêt par immersion au trempé à chaud en continu ladite tôle laminée à froid dans un bain de zinc ou d'alliage de zinc, puis,
- On refroidit ladite tôle laminée à froid et revêtue jusqu'à la température ambiante.

9. Procédé de fabrication d'une tôle selon la revendication 8, pour lequel ladite température $T_{FL}$ sera supérieure à 900°C.

10. Procédé de fabrication d'une tôle selon la revendication 8, pour lequel ladite température $T_{FL}$ sera supérieure ou égale à 920°C.

11. Procédé de fabrication d'une tôle selon l'une quelconque des revendications 8 à 10, pour lequel le point de rosée lors du recuit à la température Tr pendant la durée tr est compris entre -20°C et -15°C.

12. Procédé de fabrication d'une tôle selon l'une quelconque des revendications 8 à 11, pour lequel ladite température Tr est comprise entre Ac1+50°C et Ac3-50°C.

13. Procédé de fabrication d'une tôle selon l'une quelconque des revendications 8 à 11, pour lequel ladite température Tr est comprise entre Ac1+50°C et Ac1+170°C.

14. Procédé de fabrication d'une tôle selon l'une quelconque des revendications 8 à 13, pour lequel ladite durée $t_{eg}$ est comprise entre 30 et 80 secondes.

15. Procédé de fabrication d'une tôle selon l'une quelconque des revendications 8 à 13, pour lequel ladite durée $t_{eg}$ est comprise entre 30 et 60 secondes.

16. Procédé de fabrication d'une pièce par soudage d'au moins une tôle laminée à froid et revêtue selon l'une quelconque des revendications 1 à 7 ou obtenue par le procédé selon l'une quelconque des revendications 8 à 15 dans lequel on soude ladite tôle par soudage par résistance par point.

17. Utilisation d'une tôle d'acier laminée à froid et revêtue selon l'une quelconque des revendications 1 à 7, ou obtenue par le procédé selon l'une quelconque des revendications 8 à 16, pour la fabrication de pièces de structures ou de sécurité pour les véhicules terrestres à moteur.

**Patentansprüche**

1. Kaltgewalztes Stahlblech, das mit Zink oder einer Zinklegierung beschichtet ist, dessen Zusammensetzung umfasst, wobei die Gehalte in Gewichtsprozenten ausgedrückt sind:

$$0,17\% \le C \le 0,25\%$$

$$1,5\% \le Mn \le 2,0\%$$

$$0,50\% \le Si \le 1\%$$

$$0,50\% \le Al \le 1,2\%$$

$$B \le 0,001\%$$

$$P \le 0,030\%$$

$$S \le 0,01\%$$

$$Nb \le 0,030\%$$

$$Ti \le 0,020\%$$

$$V \le 0,015\%$$

$$Cu \le 0,1\%$$

$$Cr \le 0,150\%$$

$$Ni \le 0,1\%$$

$$0\% \le Mo \le 0,150\%,$$

wobei $Si+Al \ge 1,30\%$,
wobei der Rest der Zusammensetzung aus Eisen und unvermeidbaren Verunreinigungen besteht, die von der Bearbeitung herrühren,
die Mikrostruktur besteht aus, wobei die Gehalte in einem Flächenverhältnis ausgedrückt sind:

- 65 bis 85% Ferrit, wobei der Ferrit aus polygonalem Ferrit und bainitischem Ferrit gebildet ist, und
- 15 bis 35% Martensit- und Restaustenitinseln, wobei der Ferrit mindestens 5% nicht rekristallisierten Ferrit umfasst, unter der Maßgabe, dass der Gesamtgehalt an Restaustenit zwischen 10 und 25% liegt und der Gesamtgehalt an Martensit kleiner oder gleich 10% ist, wobei die mittlere Größe der Martensit-und Restaustenitinseln kleiner als 1,3 Mikrometer ist, ihr mittlerer Formfaktor kleiner als 3 ist, wobei der Formfaktor das Verhältnis zwischen der Länge und der maximalen Breite der Martensit- und Restaustenitinseln ist,

die mechanische Festigkeit Rm des Blechs zwischen 780 und 900 MPa, die Grenzwerte einschließend, und die Bruchdehnung A% größer oder gleich 19% ist.

**2.** Stahlblech nach Anspruch 1, dessen Zusammensetzung umfasst, wobei der Gehalt in Gewichtsprozenten ausgedrückt ist,

$$0,19\% \leq C \leq 0,23\%.$$

**3.** Stahlblech nach Anspruch 1 oder Anspruch 2, dessen Zusammensetzung umfasst, wobei der Gehalt in Gewichtsprozenten ausgedrückt ist,

$$1,6\% \leq Mn \leq 1,8\%.$$

**4.** Stahlblech nach einem beliebigen der Ansprüche 1 bis 3, dessen Zusammensetzung umfasst, wobei der Gehalt in Gewichtsprozenten ausgedrückt ist,

$$0,7\% \leq Si \leq 0,9\%.$$

**5.** Stahlblech nach einem beliebigen der Ansprüche 1 bis 4, dessen Zusammensetzung umfasst, wobei der Gehalt in Gewichtsprozenten ausgedrückt ist,

$$0,6\% \leq Al \leq 0,8\%.$$

**6.** Stahlblech nach einem beliebigen der Ansprüche 1 bis 5, dessen Zusammensetzung umfasst, wobei der Gehalt in Gewichtsprozenten ausgedrückt ist,

$$0\% \leq B \leq 0,0005\%.$$

**7.** Stahlblech nach einem beliebigen der Ansprüche 1 bis 6, bei dem mehr als 90% Flächenverhältnis der Martensit- und Restaustenitinseln eine Größe kleiner oder gleich zwei Mikrometer aufweisen.

**8.** Verfahren zur Herstellung eines kaltgewalzten Blechs, das mit Zink oder einer Zinklegierung beschichtet ist, die Schritte umfassend, nach denen:

- ein Stahl mit der Zusammensetzung nach einem beliebigen der Ansprüche 1 bis 7 bereitgestellt wird, dann
- der Stahl in Form eines Halbzeugs gegossen wird, dann
- das Halbzeug auf eine Temperatur zwischen 1150 und 1250°C aufgeheizt wird, dann
- das aufgeheizte Halbzeug warmgewalzt wird, wobei das Walzen bei einer Walzendtemperatur $T_{FL}$ größer oder gleich Ar3 erzielt wird, um das Blech zu erhalten, dann
- das warmgewalzte Blech bei einer Temperatur Tbob zwischen 500 und 600°C gewickelt wird, dann
- das warmgewalzte Blech bis auf die Umgebungstemperatur abgekühlt wird, dann
- wenn nötig, das warmgewalzte Blech gebeizt wird, dann
- das Blech kaltgewalzt wird, dann
- das kaltgewalzte Blech bei einer Geschwindigkeit Vc zwischen 1 und 30°C/s bis zu einer Temperatur Tr während einer Dauer tr größer oder gleich 15 Sekunden wieder aufgeheizt wird, wobei die Temperaturen und Dauern gewählt werden, um ein Flächenverhältnis zwischen 35 und 70% Austenit zu erhalten, dann
- das kaltgewalzte Blech bis zu einer Temperatur Teg zwischen 475 und 440°C bei einer Geschwindigkeit Vref ausreichend schnell abgekühlt wird, um das Vermeiden der Perlitbildung zu ermöglichen, dann,
- das kaltgewalzte Blech auf einer Ausgleichstemperatur während einer Dauer $t_{eg}$ zwischen 20 und 120 Sekunden gehalten wird, dann
- das kaltgewalzte Blech durch kontinuierliches Heißtauchen in ein Zinkbad oder ein Bad einer Zinklegierung beschichtet wird, dann
- das kaltgewalzte und beschichtete Blech bis auf die Umgebungstemperatur abgekühlt wird.

**9.** Verfahren zur Herstellung eines Blechs nach Anspruch 8, für das die Temperatur $T_{FL}$ größer als 900°C ist.

**10.** Verfahren zur Herstellung eines Blechs nach Anspruch 8, für das die Temperatur $T_{FL}$ größer oder gleich 920°C ist.

**11.** Verfahren zur Herstellung eines Blechs nach einem beliebigen der Ansprüche 8 bis 10, für das der Taupunkt beim Glühen bei der Temperatur Tr während der Dauer tr zwischen -20°C und -15°C liegt.

**12.** Verfahren zur Herstellung eines Blechs nach einem beliebigen der Ansprüche 8 bis 11, für das die Temperatur Tr zwischen Ac1+50°C und Ac3-50°C liegt.

**13.** Verfahren zur Herstellung eines Blechs nach einem beliebigen der Ansprüche 8 bis 11, für das die Temperatur Tr zwischen Ac1+50°C und Ac1+170°C liegt.

**14.** Verfahren zur Herstellung eines Blechs nach einem beliebigen der Ansprüche 8 bis 11, für das die Dauer $t_{eg}$ zwischen 30 und 80 Sekunden liegt.

**15.** Verfahren zur Herstellung eines Blechs nach einem beliebigen der Ansprüche 8 bis 13, für das die Dauer $t_{eg}$ zwischen 30 und 60 Sekunden liegt.

**16.** Verfahren zur Herstellung eines Teils durch Schweißen mindestens eines kaltgewalzten und beschichteten Blechs nach einem beliebigen der Ansprüche 1 bis 7 oder erhalten durch das Verfahren nach einem beliebigen der Ansprüche 1 bis 15, bei dem das Blech durch Punktwiderstandsschweißen geschweißt wird.

**17.** Verwendung eines kaltgewalzten und beschichteten Stahlblechs nach einem beliebigen der Ansprüche 1 bis 7 oder erhalten durch das Verfahren nach einem beliebigen der Ansprüche 8 bis 16 für die Herstellung von Strukturteilen oder sicherheitsbezogenen Teilen für motorgetriebene Landfahrzeuge.

**Claims**

**1.** Cold-rolled steel sheet, coated with zinc or zinc alloy, the composition of which comprises, the proportions being expressed by weight:

$$0.17\% \leq C \leq 0.25\%$$

$$1.5\% \leq Mn \leq 2.0\%$$

$$0.50\% \leq Si \leq 1\%$$

$$0.50\% \leq Al \leq 1.2\%$$

$$B \leq 0.001\%$$

$$P \leq 0.030\%$$

$$S \leq 0.01\%$$

$$Nb \leq 0.030\%$$

$$Ti \leq 0.020\%$$

$$V \leq 0.015\%$$

$$Cu \leq 0.1\%$$

$$Cr \leq 0.150\%$$

$$Ni \leq 0.1\%$$

$$0\% \leq Mo \leq 0.150\%,$$

it being understood that Si + Al ≥ 1.30%,
the rest of the composition consisting of iron and unavoidable impurities resulting from the production,
the microstructure consisting, the proportions being expressed as a surface fraction:

- of 65% to 85% ferrite, said ferrite consisting of polygonal ferrite and bainitic ferrite, and
- of 15% to 35% martensite and residual austenite islets,

said ferrite comprising less than 5% non-recrystallised ferrite, it being understood that the total proportion of residual austenite is between 10% and 25% and that the total proportion of martensite is less than or equal to 10%, the mean size of said martensite and residual austenite islets is less than 1.3 micrometres, their mean shape factor being less than 3, said shape factor being the ratio between the length and maximum width of said martensite and residual austenite islets,
the mechanical strength Rm of the sheet is between 780 and 900 MPa inclusive, and the breaking elongation A% is greater than or equal to 19%.

2. Steel sheet according to claim 1, the composition of which comprises, the proportion being expressed by weight:

$$0.19\% \leq C \leq 0.23\%.$$

3. Steel sheet according to claim 1 or claim 2, the composition of which comprises, the proportion being expressed by weight:

$$1.6\% \leq Mn \leq 1.8\%.$$

4. Steel sheet according to any one of claims 1 to 3, the composition of which comprises, the proportion being expressed by weight:

$$0.7\% \leq Si \leq 0.9\%.$$

5. Steel sheet according to any one of claims 1 to 4, the composition of which comprises, the proportion being expressed by weight:

$$0.6\% \leq Al \leq 0.8\%.$$

6. Steel sheet according to any one of claims 1 to 5, the composition of which comprises, the proportion being expressed by weight:

$$0\% < B \leq 0.0005\%.$$

7. Steel sheet according to any one of claims 1 to 6, wherein more than 90% as a surface proportion of said islets of martensite and residual austenite have a size of less than or equal to two micrometres.

8. Method for manufacturing a cold-rolled sheet, coated with zinc or zinc alloy, comprising the steps according to which:

- a steel with a composition according to any of claims 1 to 7 is procured, then
- said steel is cast in the form of a semi-finished product, then
- said semi-finished product is heated to a temperature of between 1150° and 1250°C, then
- said heated semi-finished product is hot-rolled, completing the rolling at an end-of-rolling temperature $T_{FL}$ greater than or equal to Ar3 in order to obtain a sheet, then
- said hot-rolled sheet is coiled at a temperature Tbob of between 500° and 600°C, then
- said hot-rolled sheet is cooled to ambient temperature, then
- if necessary, said hot-rolled sheet is pickled, then
- said sheet is cold-rolled, then
- said cold-rolled sheet is heated at a rate Vc of between 1° and 30°C/s to a temperature Tr for a period tr greater than or equal to 15 seconds, said temperatures and durations being chosen so as to obtain a surface fraction of austenite of between 35% and 70%, then
- -said cold-rolled sheet is cooled to a temperature Teg of between 475° and 440° at a sufficiently quick rate Vref to avoid the formation of perlite, then
- said cold-rolled sheet is maintained at the equalisation temperature Teg for a period $t_{eg}$ of between 20 and 120 seconds, then
- said cold-rolled sheet is coated by continuous hot immersion in a zinc or zinc alloy bath, then
- said cold-rolled and coated sheet is cooled to ambient temperature.

9. Method for manufacturing a sheet according to claim 8, for which said temperature $T_{FL}$ will be greater than 900°C.

10. Method for manufacturing a sheet according to claim 8, for which said temperature $T_{FL}$ will be greater than or equal to 920°C.

11. Method for manufacturing a sheet according to any one of claims 8 to 10, for which the dew point during annealing at the temperature Tr during the period tr is between -20°C and -15°C.

12. Method for manufacturing a sheet according to any one of claims 8 to 11, for which said temperature Tr is between Ac1 + 50°C and Ac3 - 50°C.

13. Method for manufacturing a sheet according to any one of claims 8 to 11, for which said temperature Tr is between Ac1 + 50°C and Ac1 + 170°C.

14. Method for manufacturing a sheet according to any one of claims 8 to 13, for which said period $t_{eg}$ is between 30 and 80 seconds.

15. Method for manufacturing a sheet according to any one of claims 8 to 13, for which said period $t_{eg}$ is between 30 and 60 seconds.

16. Method for manufacturing a part by welding at least one cold-rolled and coated sheet according to any one of claims 1 to 7 or obtained by the method according to any one of claims 8 to 15, in which said sheet is welded by resistance spot welding.

17. Use of a cold-rolled and coated steel sheet according to any one of claims 1 to 7, or obtained by the method according to any one of claims 8 to 16, for manufacturing structural or safety parts for powered land vehicles.

Figure 1

Figure 2

Figure 3

**EP 2 718 469 B1**

## RÉFÉRENCES CITÉES DANS LA DESCRIPTION

**Documents brevets cités dans la description**

- JP 2001254138 B
- WO 2002101112 A
- US 5470529 A
- EP 1865085 A

**Littérature non-brevet citée dans la description**

- **A. WASILKOWSKA et al.** Microstructure and tensile behaviour of cold-rolled TRIP-aided steels. *Journal of Materials Processing Technology,* 2004, 157-158